# EUROPEAN PATENT APPLICATION

(11) **EP 3 581 547 A1**
(43) Date of publication of application: **18.12.2019**
(21) Application number: 18750657.1
(22) Date of filing: 09.02.2018
(51) Int. Cl.: C03C 27/12, B32B 17/10, B32B 27/18, B32B 27/30, C08K 5/10, C08K 5/3475, C08K 5/3492, C08L 29/14

(54) **INTERLAYER FOR LAMINATED GLASS, AND LAMINATED GLASS**

(30) Priority: 10.02.2017 JP 2017023376
(71) Applicant: Sekisui Chemical Co., Ltd., Osaka-shi, Osaka 530-8565 (JP)
(72) Inventor: II, Daizou, Kouka-shi Shiga 528-8585 (JP); YOSHIDA, Shougo, Kouka-shi Shiga 528-8585 (JP)
(74) Representative: Ter Meer Steinmeister & Partner
(86) International application number: PCT/JP2018/004630
(87) International publication number: WO 2018/147420

(57) **Abstract**

Provided is an interlayer film for laminated glass with which a void is difficult to be formed in an end part of laminated glass, and deterioration in transparency of laminated glass can be suppressed. An interlayer film for laminated glass according to the present invention has a one-layer structure or a two or more-layer structure, the interlayer film for laminated glass contains a polyvinyl acetal resin, a plasticizer, an oxidation inhibitor, and an ultraviolet absorber, and a spectral transmittance of a pressed interlayer film when the interlayer film for laminated glass is pressed to a thickness of 3% of a thickness before pressing to obtain the pressed interlayer film is 60% or more at a wavelength of 380 nm, 40% or less at a wavelength of 350 nm, and 38% or less at a wavelength of 320 nm.

## Description

### TECHNICAL FIELD

The present invention relates to an interlayer film for laminated glass for use in laminated glass. Moreover, the present invention relates to laminated glass prepared with the interlayer film for laminated glass.

### BACKGROUND ART

Since laminated glass generates only a small amount of scattering glass fragments even when subjected to external impact and broken, the laminated glass is excellent in safety. As such, the laminated glass is widely used for automobiles, railway vehicles, aircraft, ships, buildings and the like. The laminated glass is produced by sandwiching an interlayer film for laminated glass between a pair of glass plates.

As one example of the interlayer film for laminated glass, the following Patent Document 1 discloses an interlayer film for laminated glass containing a polyvinyl acetal resin, an ultraviolet absorber, a plasticizer, an adhesive force regulator, and an oxidation inhibitor. The ultraviolet absorber used in the interlayer film is a malonic ester compound and/or an oxanilide compound.

The following Patent Document 2 discloses an interlayer film with low after yellowing tendency, having high transmittance for UV-A rays and visible light, and low transmittance for UV-B rays. The interlayer film contains polyvinyl acetal, a plasticizer, and an oxanilide compound which is a UV absorber.

Patent Document 3 indicates that laminated glass capable of suppressing occurrence of foaming and growth of foaming can be obtained.

### Related Art Documents

### Patent Document

Patent Document 1: JP2003-327454A
Patent Document 2: US2012/0052310A1
Patent Document 3: WO2012/043816A1

### SUMMARY OF THE INVENTION

### PROBLEMS TO BE SOLVED BY THE INVENTION

In an end part of laminated glass prepared with a conventional interlayer film, a void can be formed. This void is likely to be formed particularly when light, heat and the like is applied to the laminated glass. The void is a recess part in which the interlayer film is lost in the end part of the laminated glass. The void is different from a foaming product arising by foaming as described in Patent Document 3.

When a void is formed in an end part of laminated glass, the appearance of the laminated glass can be impaired, and the adhesive force between the interlayer film and the glass plate or the like can deteriorate.

It is also conceivable to solve the above problem by increasing an adding amount of an ultraviolet absorber or the like in a conventional interlayer film. However, when laminated glass is prepared with such an interlayer film, the transparency of the laminated glass can deteriorate.

It is an object of the present invention to provide an interlayer film for laminated glass with which a void is difficult to be formed in an end part of laminated glass, and deterioration in transparency of laminated glass can be suppressed.

### MEANS FOR SOLVING THE PROBLEMS

According to a broad aspect of the present invention, there is provided an interlayer film for laminated glass having a one-layer structure or a two or more-layer structure (hereinafter, sometimes described as interlayer film), the interlayer film containing a polyvinyl acetal resin, a plasticizer, an oxidation inhibitor, and an ultraviolet absorber, a spectral transmittance of a pressed interlayer film when the interlayer film is pressed to a thickness of 3% of a thickness before pressing to obtain the pressed interlayer film being 60% or more at a wavelength of 380 nm, 40% or less at a wavelength of 350 nm, and 38% or less at a wavelength of 320 nm.

In a specific aspect of the interlayer film according to the present invention, the interlayer film includes only a first layer containing a polyvinyl acetal resin, a plasticizer, and an oxidation inhibitor, or the interlayer film includes a first layer containing a polyvinyl acetal resin, a plasticizer, and an oxidation inhibitor, and a second layer arranged on a first surface side of the first layer, containing a polyvinyl acetal resin, a plasticizer, and an oxidation inhibitor, and the interlayer film optionally includes a third layer arranged on a second surface side that is opposite to the first surface side of the first layer, containing a polyvinyl acetal resin, a plasticizer and an oxidation inhibitor, and at least one layer of the first layer, the second layer and the third layer contains an ultraviolet absorber.

It is preferred that the ultraviolet absorber contain a malonic ester compound or a triazine compound. It is preferred that the ultraviolet absorber contain the malonic ester compound. It is preferred that the malonic ester compound be dimethyl (p-methoxybenzylidene)malonate. It is preferred that the ultraviolet absorber contain the triazine compound. It is preferred that the triazine compound be 2-[4,6-bis(2,4-dimethylphenyl)-1,3,5-triazine-2-yl]-5-(octyloxy)phenol. It is preferred that a content of the malonic ester compound in the interlayer film be 0.14% by weight or more and 0.6% by weight or less. It is preferred that a content of the triazine compound in the interlayer film be 0.045% by weight or more and 1% by weight or less. It is preferred that a content of the triazine compound in the interlayer film be 0.045% by weight or more and 0.2% by weight or less. It is preferred that a content of the triazine compound in the interlayer film be 0.08% by weight or more and 1% by weight or less. It is preferred that the ultraviolet absorber contain a benzotriazole compound. It is preferred that the benzotriazole compound be 2-(2-hydroxy-3-t-butyl-5-methylphenyl)-5-chlorobenzotriazole. It is preferred a content of the benzotriazole compound in the interlayer film be more than 0% by weight and 0.33% by weight or less.

According to a broad aspect of the present invention, there is provided laminated glass including a first lamination glass member, a second lamination glass member, and the interlayer film for laminated glass described above, the interlayer film for laminated glass being arranged between the first lamination glass member and the second lamination glass member.

### EFFECT OF THE INVENTION

The interlayer film for laminated glass according to the present invention has a one-layer structure or a two or more-layer structure. The interlayer film for laminated glass according to the present invention contains a polyvinyl acetal resin, a plasticizer, an oxidation inhibitor, and an ultraviolet absorber. A spectral transmittance of a pressed interlayer film when the interlayer film for laminated glass is pressed to a thickness of 3% of a thickness before pressing to obtain the pressed interlayer film is 60% or more at a wavelength of 380 nm, 40% or less at a wavelength of 350 nm, and 38% or less at a wavelength of 320 nm. Since the interlayer film for laminated glass according to the present invention has the configuration as described above, it is possible to make a void difficult to be formed in an end part of laminated glass, and it is possible to suppress deterioration in transparency of laminated glass.

### BRIEF DESCRIPTION OF DRAWINGS

[Fig. 1] Fig. 1 is a sectional view schematically showing an interlayer film for laminated glass according to one embodiment of the present invention.
[Fig. 2] Fig. 2 is a sectional view schematically showing an interlayer film for laminated glass according to another embodiment of the present invention.
[Fig. 3] Fig. 3 is a sectional view schematically showing an example of laminated glass prepared with the interlayer film for laminated glass shown in Fig. 1.
[Fig. 4] Fig. 4 is a sectional view schematically showing an example of laminated glass prepared with the interlayer film for laminated glass shown in Fig. 2.

### MODE(S) FOR CARRYING OUT THE INVENTION

Hereinafter, the present invention will be described in detail.

### (Interlayer film for laminated glass)

The interlayer film for laminated glass according to the present invention (hereinafter, sometimes described as interlayer film) has a one-layer structure or a two or more-layer structure. The interlayer film according to the present invention may have a one-layer structure or may have a two or more-layer structure. The interlayer film according to the present invention may have a two-layer structure or may have a three or more-layer structure. The interlayer film according to the present invention may be an interlayer film having a one-layer structure provided with only a first layer (single-layered interlayer film) or may be an interlayer film having two or more-layer structure provided with a first layer and other layer (multi-layered interlayer film).

The interlayer film according to the present invention contains a polyvinyl acetal resin, a plasticizer, an oxidation inhibitor, and an ultraviolet absorber.

In the interlayer film according to the present invention, a spectral transmittance of a pressed interlayer film when the interlayer film is pressed to a thickness of 3% of a thickness before pressing to obtain the pressed interlayer film (hereinafter, the interlayer film obtained in this manner is sometimes described as a pressed interlayer film) is 60% or more at a wavelength of 380 nm, 40% or less at a wavelength of 350 nm, and 38% or less at a wavelength of 320 nm.

Since the interlayer film for laminated glass according to the present invention has the configuration as described above, it is possible to make a void difficult to be formed in an end part of laminated glass, and also it is possible to suppress deterioration in transparency of laminated glass.

Hereinafter, specific embodiments of the present invention will be described with reference to the drawings.

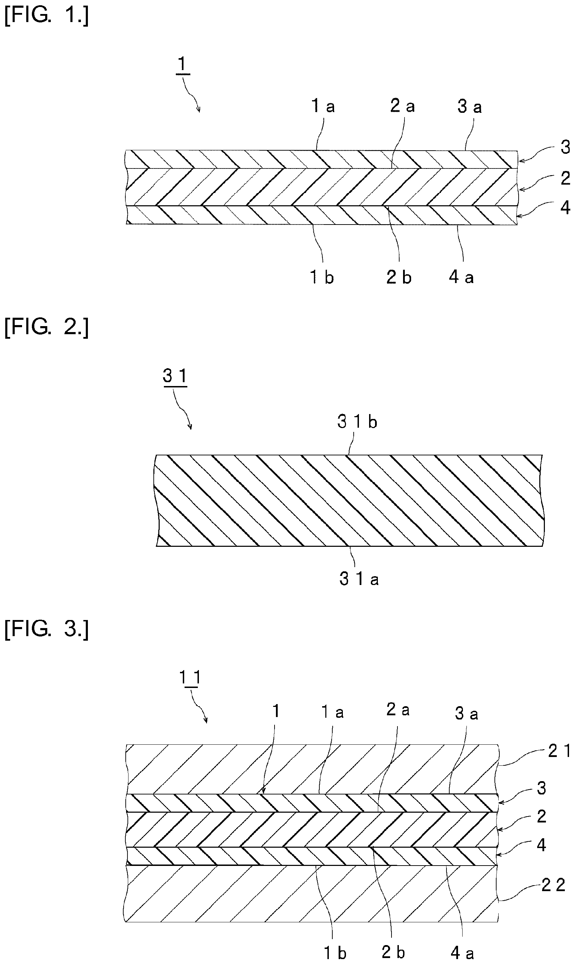

Fig. 1 is a sectional view schematically showing an interlayer film for laminated glass according to one embodiment of the present invention.

An interlayer film 1 shown in Fig. 1 is a multi-layered interlayer film having a two or more-layer structure. The interlayer film 1 is used for obtaining laminated glass. The interlayer film 1 is an interlayer film for laminated glass. The interlayer film 1 includes a first layer 2, a second layer 3 arranged on a first surface 2a side of the first layer 2, and a third layer 4 arranged on a second surface 2b side opposite to the first surface 2a of the first layer 2. The second layer 3 is layered on the first surface 2a of the first layer 2. The third layer 4 is layered on the second surface 2b of the first layer 2. The first layer 2 is an intermediate layer. Each of the second layer 3 and the third layer 4 is, for example, a protective layer and is a surface layer in the present embodiment. The first layer 2 is arranged between the second layer 3 and the third layer 4 to be sandwiched therebetween. Accordingly, the interlayer film 1 has a multilayer structure in which the second layer 3, the first layer 2, and the third layer 4 are arranged in this order. In the interlayer film 1, the second layer 3, the first layer 2, and the third layer 4 are arranged and layered in this order.

It is preferred that an outer surface 3a on the opposite side of the first layer 2 side of the second layer 3 be a surface on which a lamination glass member is laminated. It is preferred that an outer surface 4a on the opposite side of the first layer 2 side of the third layer 4 be a surface on which a lamination glass member is laminated.

In this connection, other layers may be arranged between the first layer 2 and the second layer 3 and between the first layer 2 and the third layer 4, respectively. It is preferred that the first layer 2 and the second layer 3, and the first layer 2 and the third layer 4 be directly layered. Examples of the other layer include layers containing a thermoplastic resin such as a polyvinyl acetal resin, and layers containing, for example, polyethylene terephthalate.

The interlayer film 1, as a whole, contains a polyvinyl acetal resin, a plasticizer, an oxidation inhibitor, and an ultraviolet absorber. To be more specific, at least one layer of the first layer 2, the second layer 3 and the third layer 4 contains a polyvinyl acetal resin, contains a plasticizer, contains an oxidation inhibitor, and contains an ultraviolet absorber.

Fig. 2 is a sectional view schematically showing an interlayer film for laminated glass according to another embodiment of the present invention.

An interlayer film 31 shown in Fig. 2 is a single-layered interlayer film having a one-layer structure. The interlayer film 31 is a first layer. The interlayer film 31 is used for obtaining laminated glass. The interlayer film 31 is an interlayer film for laminated glass. The interlayer film 31 contains a polyvinyl acetal resin, a plasticizer, an oxidation inhibitor, and an ultraviolet absorber.

Since the interlayer film 1, 31 has the configuration as described above, it is possible to make a void difficult to be formed in an end part of laminated glass prepared with the interlayer film 1, 31, and it is possible to suppress deterioration in transparency of laminated glass. In the interlayer film 1, it is possible to make a void difficult to be formed in an end part of laminated glass even when the laminated glass prepared with the interlayer film 1 is irradiated with light for a long term, or the laminated glass is exposed under high temperature for a long term. Furthermore, the transparency of the laminated glass can be kept even when the laminated glass prepared with the interlayer film 1, 31 is exposed under high temperature for a long term. The void is a recess part of an interlayer film in which the interlayer film is missing inwardly in an end part of laminated glass. For example, inward retraction of the interlayer film forms the recess part.

The interlayer film may be a single-layered interlayer film having only the first layer, or may be a multi-layered interlayer film for laminated glass including the first layer. The interlayer film may be an interlayer film provided with at least the first layer and the second layer (the interlayer film may optionally be provided with the third layer). The interlayer film may be provided with the first layer, the second layer, and the third layer.

In the interlayer film 1, the second layer 3 and the third layer 4 are respectively layered on both surfaces of the first layer 2. In a multi-layered interlayer film, the second layer can be arranged on the first surface side of the first layer. The second layer may be arranged on the first surface side of the first layer, and the third layer may not be arranged on the second surface side of the first layer. It is preferred that the second layer be arranged on the first surface side of the first layer, and the third layer be arranged on the second surface side of the first layer. Arranging the third layer on the second surface side of the first layer further improves handleability of the interlayer film, and penetration resistance of laminated glass. In an end part of laminated glass, a void becomes more difficult to be formed, so that the transparency of the laminated glass can be kept. Further, adhesion to a lamination glass member or the like can be adjusted on the surface of both sides of the interlayer film. When the third layer is absent, adhesion of the outer surface of the second layer of the interlayer film, to a lamination glass member can be adjusted.

The interlayer film has the following configuration (1) and configuration (2).

(Configuration (1)) The interlayer film is provided exclusively with a first layer containing a polyvinyl acetal resin, a plasticizer, an oxidation inhibitor, and an ultraviolet absorber.

(Configuration (2)) The interlayer film is provided with a first layer containing a polyvinyl acetal resin, a plasticizer, and an oxidation inhibitor, and a second layer containing a polyvinyl acetal resin, a plasticizer, and an oxidation inhibitor, arranged on a first surface side of the first layer. The interlayer film is optionally provided with a third layer containing a polyvinyl acetal resin, a plasticizer, and an oxidation inhibitor, arranged on a second surface side opposite to the first surface side of the first layer. At least one layer of the first layer, the second layer and the third layer contains an ultraviolet absorber.

The configuration (2) includes the following configuration (2-1) and the following configuration (2-2), and is preferably the configuration (2-1) or the configuration (2-2). The interlayer film satisfies the configuration (1), the configuration (2-1) or the configuration (2-2).

(Configuration (2-1)) The interlayer film is provided with a first layer containing a polyvinyl acetal resin, a plasticizer, and an oxidation inhibitor, and a second layer containing a polyvinyl acetal resin, a plasticizer, and an oxidation inhibitor, arranged on a first surface side of the first layer. The interlayer film is not provided with a third layer containing a polyvinyl acetal resin, a plasticizer, and an oxidation inhibitor, arranged on a second surface side opposite to the first surface side of the first layer. At least one layer of the first layer and the second layer contains an ultraviolet absorber. In this case, the interlayer film has a two or more-layer structure.

(Configuration (2-2)) The interlayer film is provided with a first layer containing a polyvinyl acetal resin, a plasticizer, and an oxidation inhibitor, and a second layer containing a polyvinyl acetal resin, a plasticizer, and an oxidation inhibitor, arranged on a first surface side of the first layer. The interlayer film is provided with a third layer containing a polyvinyl acetal resin, a plasticizer, and an oxidation inhibitor, arranged on a second surface side opposite to the first surface side of the first layer. At least one layer of the first layer, the second layer and the third layer contains an ultraviolet absorber. In this case, the interlayer film has a three or more-layer structure.

The interlayer film may satisfy the configuration (1), or may satisfy the configuration (2). It is preferred that the interlayer film satisfy the configuration (2). The interlayer film may satisfy the configuration (2-1), or may satisfy the configuration (2-2). It is preferred that the interlayer film satisfy the configuration (2-2).

It is preferred that the interlayer film be provided with the second layer as a surface layer of the interlayer film. It is preferred that the interlayer film be provided with the third layer as a surface layer of the interlayer film.

From the viewpoint of effectively making a void difficult to be formed in an end part of laminated glass, and effectively suppressing deterioration in transparency of laminated glass, a glass transition temperature of the second layer is preferably higher than a glass transition temperature of the first layer. From the viewpoint of effectively making a void difficult to be formed in an end part of laminated glass, and effectively suppressing deterioration in transparency of laminated glass, a glass transition temperature of the second layer is preferably more than 25°C, more preferably 30°C or more, further preferably 33°C or more, and especially preferably 35°C or more. From the viewpoint of effectively making a void difficult to be formed in an end part of laminated glass, a glass transition temperature of the third layer is preferably higher than a glass transition temperature of the first layer. From the viewpoint of effectively making a void difficult to be formed in an end part of laminated glass, a glass transition temperature of the third layer is preferably more than 25°C, more preferably 30°C or more, further preferably 33°C or more, and especially preferably 35°C or more. The upper limit of the glass transition temperature of the second layer and the third layer is not particularly limited. From the viewpoint of further improving the sound insulating properties of the interlayer film, the glass transition temperature of the second layer and the third layer may be 60°C or less.

From the viewpoint of further enhancing the penetration resistance of the laminated glass prepared with the interlayer film, the first layer preferably contains a polyvinyl acetal resin, and preferably contains a plasticizer. From the viewpoint of further enhancing the penetration resistance of the laminated glass prepared with the interlayer film, the second layer preferably contains a polyvinyl acetal resin, and preferably contains a plasticizer. Also, from the viewpoint of further enhancing the penetration resistance of laminated glass prepared with the interlayer film, when the interlayer film is provided with the third layer, the third layer preferably contains a polyvinyl acetal resin, and preferably contains a plasticizer. Since the third layer contains a polyvinyl acetal resin and a plasticizer, a void becomes more difficult to be formed in an end part of laminated glass, and transparency of the laminated glass can be kept.

It is preferred that each of the first layer and the second layer contain a polyvinyl acetal resin and a plasticizer. It is preferred that each of the first layer, the second layer and the third layer contain a polyvinyl acetal resin and a plasticizer.

It is preferred that each of the first layer and the second layer contain a polyvinyl acetal resin, a plasticizer and an oxidation inhibitor. It is preferred that each of the first layer, the second layer and the third layer contain a polyvinyl acetal resin, a plasticizer and an oxidation inhibitor.

Hereinafter, the details of the first layer (including a single-layered interlayer film), the second layer, and the third layer which constitute the interlayer film for laminated glass according to the present invention, and the details of each ingredient contained in the first layer, the second layer, and the third layer will be described.

### (Polyvinyl acetal resin)

It is preferred that the first layer (including a single-layered interlayer film) contain a polyvinyl acetal resin (hereinafter, sometimes described as a polyvinyl acetal resin (1)). It is preferred that the second layer contain a polyvinyl acetal resin (hereinafter, sometimes described as a polyvinyl acetal resin (2)). It is preferred that the third layer contain a polyvinyl acetal resin (hereinafter, sometimes described as a polyvinyl acetal resin (3)). Each of the polyvinyl acetal resin (1), the polyvinyl acetal resin (2) and the polyvinyl acetal resin (3) may be the same or different from one another. One kind of each of the polyvinyl acetal resin (1), the polyvinyl acetal resin (2) and the polyvinyl acetal resin (3) may be used alone, and two or more kinds thereof may be used in combination.

For example, the polyvinyl acetal resin can be produced by acetalizing polyvinyl alcohol with an aldehyde. The polyvinyl alcohol can be obtained, for example, by saponifying polyvinyl acetate. The saponification degree of the polyvinyl alcohol generally falls within the range of 70 to 99.9% by mole. The polyoxymethylene (or polyacetal) resin is included in the polyvinyl acetal resin. It is preferred that the polyvinyl acetal resin be a polyvinyl butyral resin.

The average polymerization degree of the polyvinyl alcohol is preferably 200 or more, more preferably 500 or more, even more preferably 1500 or more, further preferably 1600 or more, especially preferably 2600 or more, and most preferably 2700 or more and is preferably 5000 or less, more preferably 4000 or less, and further preferably 3500 or less. When the average polymerization degree is the above-described lower limit or more, the penetration resistance of laminated glass is further enhanced. When the average polymerization degree is the above-described upper limit or less, formation of an interlayer film is facilitated. In particular, when the average polymerization degree of the polyvinyl alcohol is 1500 or more, it is possible to prevent the appearance of the laminated glass from being impaired by defective deaeration.

The average polymerization degree of the polyvinyl alcohol is determined by a method in accordance with JIS K6726 "Testing methods for polyvinyl alcohol".

The number of carbon atoms of the acetal group contained in the polyvinyl acetal resin is not particularly limited. The aldehyde used at the time of producing the polyvinyl acetal resin is not particularly limited. It is preferred that the number of carbon atoms of the acetal group in the polyvinyl acetal resin lie within the range of 3 to 5, and it is preferred that the number of carbon atoms of the acetal group be 3 or 4. When the number of carbon atoms of the acetal group in the polyvinyl acetal resin is 3 or more, the glass transition temperature of the interlayer film is sufficiently lowered.

The aldehyde is not particularly limited. In general, as the aldehyde, an aldehyde with 1 to 10 carbon atoms is suitably used. Examples of the aldehyde with 1 to 10 carbon atoms include formaldehyde, acetaldehyde, propionaldehyde, n-butyraldehyde, isobutyraldehyde, n-valeraldehyde, 2-ethylbutyraldehyde, n-hexylaldehyde, n-octylaldehyde, n-nonylaldehyde, n-decylaldehyde, benzaldehyde, and the like. Formaldehyde, acetaldehyde, propionaldehyde, n-butylaldehyde, isobutylaldehyde, n-hexylaldehyde or n-valeraldehyde is preferred. Formaldehyde, acetaldehyde, propionaldehyde, n-butylaldehyde or isobutylaldehyde is more preferred, and acetaldehyde or n-butylaldehyde is further preferred. One kind of the aldehyde may be used alone, and two or more kinds thereof may be used in combination.

The content of the hydroxyl group (the amount of hydroxyl groups) of the polyvinyl acetal resin (1) is preferably 17% by mole or more, more preferably 20% by mole or more, further preferably 22% by mole or more, and is preferably 30% by mole or less, more preferably less than 27% by mole, and further preferably 25% by mole or less. When the content of the hydroxyl group is the above-described lower limit or more, the adhesive force of the interlayer film is further enhanced. In particular, when the content of the hydroxyl group of the polyvinyl acetal resin (1) is 20% by mole or more, the resin is high in reaction efficiency and is excellent in productivity, and moreover, when less than 27% by mole, the sound insulating properties of laminated glass are further heightened. Moreover, when the content of the hydroxyl group is the above-described upper limit or less, the flexibility of the interlayer film is enhanced and the handling of the interlayer film is facilitated.

The content of the hydroxyl group of each of the polyvinyl acetal resin (2) and the polyvinyl acetal resin (3) is preferably 25% by mole or more and more preferably 28% by mole or more and is preferably 35% by mole or less and more preferably 32% by mole or less. When the content of the hydroxyl group is the above-described lower limit or more, the adhesive force of the interlayer film is further enhanced. Moreover, when the content of the hydroxyl group is the above-described upper limit or less, the flexibility of the interlayer film is enhanced and the handling of the interlayer film is facilitated.

The content of the hydroxyl group of the polyvinyl acetal resin is a mole fraction, represented in percentage, obtained by dividing the amount of ethylene groups to which the hydroxyl group is bonded by the total amount of ethylene groups in the main chain. For example, the amount of ethylene groups to which the hydroxyl group is bonded can be measured in accordance with JIS K6728 "Testing methods for polyvinyl butyral".

The acetylation degree (the amount of acetyl groups) of the polyvinyl acetal resin (1) is preferably 0.01% by mole or more, more preferably 0.1% by mole or more, even more preferably 7% by mole or more, further preferably 9% by mole or more and is preferably 30% by mole or less, more preferably 25% by mole or less, and further preferably 15% by mole or less. When the acetylation degree is the above-described lower limit or more, the compatibility between the polyvinyl acetal resin and a plasticizer is enhanced. When the acetylation degree is the above-described upper limit or less, with regard to the interlayer film and laminated glass, the moisture resistance thereof is enhanced. In particular, when the acetylation degree of the polyvinyl acetal resin (1) is 0.1% by mole or more and is 25% by mole or less, the resulting laminated glass is excellent in penetration resistance.

The acetylation degree of each of the polyvinyl acetal resin (2) and the polyvinyl acetal resin (3) is preferably 0.01% by mole or more and more preferably 0.5% by mole or more and is preferably 10% by mole or less and more preferably 2% by mole or less. When the acetylation degree is the above-described lower limit or more, the compatibility between the polyvinyl acetal resin and a plasticizer is enhanced. When the acetylation degree is the above-described upper limit or less, with regard to the interlayer film and laminated glass, the moisture resistance thereof is enhanced.

The acetylation degree is a mole fraction, represented in percentage, obtained by dividing the amount of ethylene groups to which the acetyl group is bonded by the total amount of ethylene groups in the main chain. For example, the amount of ethylene groups to which the acetyl group is bonded can be measured in accordance with JIS K6728 "Testing methods for polyvinyl butyral".

The acetalization degree of the polyvinyl acetal resin (1) (the butyralization degree in the case of a polyvinyl butyral resin) is preferably 47% by mole or more, more preferably 60% by mole or more and is preferably 80% by mole or less, and more preferably 70% by mole or less. When the acetalization degree is the above-described lower limit or more, the compatibility between the polyvinyl acetal resin and a plasticizer is enhanced. When the acetalization degree is the above-described upper limit or less, the reaction time required for producing the polyvinyl acetal resin is shortened.

The acetalization degree of each of the polyvinyl acetal resin (2) and the polyvinyl acetal resin (3) (the butyralization degree in the case of a polyvinyl butyral resin) is preferably 55% by mole or more and more preferably 67% by mole or more and is preferably 75% by mole or less and more preferably 71% by mole or less. When the acetalization degree is the above-described lower limit or more, the compatibility between the polyvinyl acetal resin and a plasticizer is enhanced. When the acetalization degree is the above-described upper limit or less, the reaction time required for producing the polyvinyl acetal resin is shortened.

The acetalization degree is determined in the following manner. From the total amount of the ethylene group in the main chain, the amount of the ethylene group to which the hydroxyl group is bounded and the amount of the ethylene group to which the acetyl group is bonded are subtracted. The obtained value is divided by the total amount of the ethylene group in the main chain to obtain a mole fraction. The mole fraction represented in percentage is the acetalization degree.

In this connection, it is preferred that the content of the hydroxyl group (the amount of hydroxyl groups), the acetalization degree (the butyralization degree) and the acetylation degree be calculated from the results measured by a method in accordance with JIS K6728 "Testing methods for polyvinyl butyral". In this context, a method in accordance with ASTM D1396-92 may be used. When the polyvinyl acetal resin is a polyvinyl butyral resin, the content of the hydroxyl group (the amount of hydroxyl groups), the acetalization degree (the butyralization degree) and the acetylation degree can be calculated from the results measured by a method in accordance with JIS K6728 "Testing methods for polyvinyl butyral".

From the viewpoint of further enhancing the penetration resistance of laminated glass, it is preferred that the polyvinyl acetal resin (1) be a polyvinyl acetal resin (A) with an acetylation degree (a) of 8% by mole or less and an acetalization degree (a) of 70% by mole or more or a polyvinyl acetal resin (B) with an acetylation degree (b) of more than 8% by mole. The polyvinyl acetal resin (1) may be the polyvinyl acetal resin (A) and may be the polyvinyl acetal resin (B).

The acetylation degree (a) of the polyvinyl acetal resin (A) is 8% by mole or less, preferably 7.5% by mole or less, more preferably 7% by mole or less, further preferably 6.5% by mole or less, especially preferably 5% by mole or less, preferably 0.1% by mole or more, more preferably 0.5% by mole or more, further preferably 0.8% by mole or more and especially preferably 1% by mole or more. When the acetylation degree (a) is the above-described upper limit or less and the above-described lower limit or more, the transfer of a plasticizer can be easily suppressed and the sound insulating properties of laminated glass are further heightened.

The acetalization degree (a) of the polyvinyl acetal resin (A) is 70% by mole or more, preferably 70.5% by mole or more, more preferably 71% by mole or more, further preferably 71.5% by mole or more, and especially preferably 72% by mole or more. The acetalization degree (a) of the polyvinyl acetal resin (A) is preferably 85% by mole or less, more preferably 83% by mole or less, further preferably 81% by mole or less, and especially preferably 79% by mole or less. When the acetalization degree (a) is the above-described lower limit or more, the sound insulating properties of laminated glass are further heightened. When the acetalization degree (a) is the above-described upper limit or less, the reaction time required for producing the polyvinyl acetal resin (A) can be shortened.

The content (a) of the hydroxyl group of the polyvinyl acetal resin (A) is preferably 18% by mole or more, more preferably 19% by mole or more, further preferably 20% by mole or more, and especially preferably 21% by mole or more, and is preferably 31% by mole or less, more preferably 30% by mole or less, further preferably 29% by mole or less and especially preferably 28% by mole or less. When the content (a) of the hydroxyl group is the above-described lower limit or more, the adhesive force of the first layer is further heightened. When the content (a) of the hydroxyl group is the above-described upper limit or less, the sound insulating properties of laminated glass are further heightened.

The acetylation degree (b) of the polyvinyl acetal resin (B) is more than 8% by mole, preferably 9% by mole or more, more preferably 9.5% by mole or more, further preferably 10% by mole or more, especially preferably 10.5% by mole or more, and is preferably 30% by mole or less, more preferably 28% by mole or less, further preferably 26% by mole or less and especially preferably 24% by mole or less. When the acetylation degree (b) is the above-described lower limit or more, the sound insulating properties of laminated glass are further heightened. When the acetylation degree (b) is the above-described upper limit or less, the reaction time required for producing the polyvinyl acetal resin (B) can be shortened.

The acetalization degree (b) of the polyvinyl acetal resin (B) is preferably 50% by mole or more, more preferably 53% by mole or more, further preferably 55% by mole or more, especially preferably 60% by mole or more, and is preferably 80% by mole or less, more preferably 78% by mole or less, further preferably 76% by mole or less and especially preferably 74% by mole or less. When the acetalization degree (b) is the above-described lower limit or more, the sound insulating properties of laminated glass are further heightened. When the acetalization degree (b) is the above-described upper limit or less, the reaction time required for producing the polyvinyl acetal resin (B) can be shortened.

The content (b) of the hydroxyl group of the polyvinyl acetal resin (B) is preferably 18% by mole or more, more preferably 19% by mole or more, further preferably 20% by mole or more, and especially preferably 21% by mole or more, and is preferably 31% by mole or less, more preferably 30% by mole or less, further preferably 29% by mole or less and especially preferably 28% by mole or less. When the content (b) of the hydroxyl group is the above-described lower limit or more, the adhesive force of the first layer is further heightened. When the content (b) of the hydroxyl group is the above-described upper limit or less, the sound insulating properties of laminated glass are further heightened.

It is preferred that each of the polyvinyl acetal resin (A) and the polyvinyl acetal resin (B) be a polyvinyl butyral resin.

### (Plasticizer)

It is preferred that the first layer (including a single-layered interlayer film) contain a plasticizer (hereinafter, sometimes described as a plasticizer (1)). It is preferred that the second layer contain a plasticizer (hereinafter, sometimes described as a plasticizer (2)). It is preferred that the third layer contain a plasticizer (hereinafter, sometimes described as a plasticizer (3)). By using a polyvinyl acetal resin and a plasticizer together, the adhesive force of a layer containing the polyvinyl acetal resin and the plasticizer to a lamination glass member or another layer is moderately heightened. The plasticizer is not particularly limited. The plasticizer (1), the plasticizer (2) and the plasticizer (3) may be the same as or different from one another. One kind of the plasticizer may be used alone and two or more kinds thereof may be used in combination.

Examples of the plasticizer include organic ester plasticizers such as a monobasic organic acid ester and a polybasic organic acid ester, organic phosphate plasticizers such as an organic phosphate plasticizer and an organic phosphite plasticizer, and the like. Organic ester plasticizers are preferred. It is preferred that the plasticizer be a liquid plasticizer.

Examples of the monobasic organic acid ester include a glycol ester obtained by the reaction of a glycol with a monobasic organic acid, and the like. Examples of the glycol include triethylene glycol, tetraethylene glycol, tripropylene glycol, and the like. Examples of the monobasic organic acid include butyric acid, isobutyric acid, caproic acid, 2-ethylbutyric acid, heptanoic acid, n-octylic acid, 2-ethylhexanoic acid, n-nonylic acid, decylic acid, and the like.

Examples of the polybasic organic acid ester include an ester compound of a polybasic organic acid and an alcohol having a linear or branched structure of 4 to 8 carbon atoms, and the like. Examples of the polybasic organic acid include adipic acid, sebacic acid, azelaic acid, and the like.

Examples of the organic ester plasticizer include triethylene glycol di-2-ethylpropanoate, triethylene glycol di-2-ethylbutyrate, triethylene glycol di-2-ethylhexanoate, triethylene glycol dicaprylate, triethylene glycol di-n-octanoate, triethylene glycol di-n-heptanoate, tetraethylene glycol di-n-heptanoate, dibutyl sebacate, dioctyl azelate, dibutyl carbitol adipate, ethylene glycol di-2-ethylbutyrate, 1,3-propylene glycol di-2-ethylbutyrate, 1,4-butylene glycol di-2-ethylbutyrate, diethylene glycol di-2-ethylbutyrate, diethylene glycol di-2-ethylhexanoate, dipropylene glycol di-2-ethylbutyrate, triethylene glycol di-2-ethylpentanoate, tetraethylene glycol di-2-ethylbutyrate, diethylene glycol dicaprylate, dihexyl adipate, dioctyl adipate, hexyl cyclohexyl adipate, a mixture of heptyl adipate and nonyl adipate, diisononyl adipate, diisodecyl adipate, heptyl nonyl adipate, dibutyl sebacate, oil-modified sebacic alkyds, a mixture of a phosphoric acid ester and an adipic acid ester, and the like. Organic ester plasticizers other than these may be used. Other adipic acid esters other than the above-described adipic acid esters may be used.

Examples of the organic phosphate plasticizer include tributoxyethyl phosphate, isodecyl phenyl phosphate, triisopropyl phosphate, and the like.

It is preferred that the plasticizer be a diester plasticizer represented by the following formula (1).

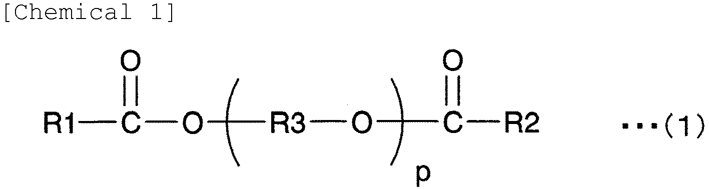

In the foregoing formula (1), R1 and R2 each represent an organic group with 2 to 10 carbon atoms, R3 represents an ethylene group, an isopropylene group, or an n-propylene group, and p represents an integer of 3 to 10. It is preferred that R1 and R2 in the foregoing formula (1) each be an organic group with 5 to 10 carbon atoms, and it is more preferred that R1 and R2 each be an organic group with 6 to 10 carbon atoms.

It is preferred that the plasticizer include triethylene glycol di-2-ethylhexanoate (3GO), triethylene glycol di-2-ethylbutyrate (3GH) or triethylene glycol di-2-ethylpropanoate. It is more preferred that the plasticizer include triethylene glycol di-2-ethylhexanoate or triethylene glycol di-2-ethylbutyrate, and it is further preferred that the plasticizer include triethylene glycol di-2-ethylhexanoate.

In the first layer, the content of the plasticizer (1) relative to 100 parts by weight of the polyvinyl acetal resin (1) is referred to as content (1). The content (1) is preferably 40 parts by weight or more, more preferably 55 parts by weight or more, and is preferably 90 parts by weight or less, and more preferably 85 parts by weight or less. When the content (1) is the above-described lower limit or more, the flexibility of the interlayer film is enhanced and the handling of the interlayer film is facilitated. When the content (1) is the above-described upper limit or less, the transparency of the interlayer film is further enhanced.

In the second layer, the content of the plasticizer (2) relative to 100 parts by weight of the polyvinyl acetal resin (2) is referred to as content (2). In the third layer, the content of the plasticizer (3) relative to 100 parts by weight of the polyvinyl acetal resin (3) is referred to as content (1). Each of the content (2) and the content (3) is preferably 30 parts by weight or more, more preferably 35 parts by weight or more, and is preferably 44 parts by weight or less, and more preferably 42 parts by weight or less. When each of the content (2) and the content (3) is the above-described lower limit or more, the flexibility of the interlayer film is enhanced and the handling of the interlayer film is facilitated. When each of the content (2) and the content (3) is the above-described upper limit or less, the penetration resistance of laminated glass is further enhanced.

From the viewpoint of making a void more difficult to be formed in an end part of laminated glass, it is preferred that the content (1) be larger than the content (2) and it is preferred that the content (1) be larger than the content (3).

From the viewpoint of further enhancing the penetration resistance of laminated glass, each of the absolute value of difference between the content (1) and the content (2) and the absolute value of difference between the content (1) and the content (3) is preferably 10 parts by weight or more, and more preferably 20 parts by weight or more. Each of the absolute value of difference between the content (1) and the content (2) and the absolute value of difference between the content (1) and the content (3) is preferably 50 parts by weight or less.

### (Ultraviolet absorber)

The interlayer film contains an ultraviolet absorber. It is preferred that the first layer contain an ultraviolet absorber. It is preferred that the second layer contain an ultraviolet absorber. It is preferred that the third layer contain an ultraviolet absorber. By the use of an ultraviolet absorber, even when the interlayer film and the laminated glass are used for a long period of time, the visible light transmittance becomes further difficult to be lowered. One kind of the ultraviolet absorber may be used alone, and two or more kinds thereof may be used in combination.

Examples of the ultraviolet absorber include metal-based ultraviolet absorbers, metal oxide-based ultraviolet absorbers, benzotriazole-based ultraviolet absorbers (a benzotriazole compound, a compound having a benzotriazole structure), benzophenone-based ultraviolet absorbers (a benzophenone compound, a compound having a benzophenone structure), triazine-based ultraviolet absorbers (a triazine compound, a compound having a triazine structure), malonic-based ester ultraviolet absorbers (a malonic ester compound, a compound having a malonic ester structure), oxanilide-based ultraviolet absorbers (an oxanilide compound, a compound having an oxanilide structure), benzoate-based ultraviolet absorbers (a benzoate compound, a compound having a benzoate structure), and the like.

Examples of the metal-based ultraviolet absorber include platinum particles, particles in which the surface of platinum particles is coated with silica, palladium particles, particles in which the surface of palladium particles is coated with silica, and the like. It is preferred that the ultraviolet absorber not be heat shielding particles.

Examples of the metal oxide-based ultraviolet absorber include zinc oxide, titanium oxide, cerium oxide, and the like. Furthermore, with regard to the metal oxide-based ultraviolet absorber, the surface thereof may be coated with any material. Examples of the coating material for the surface of the metal oxide-based ultraviolet absorber include an insulating metal oxide, a hydrolyzable organosilicon compound, a silicone compound, and the like.

Examples of the insulating metal oxide include silica, alumina, zirconia, and the like. For example, the insulating metal oxide has a band-gap energy of 5.0 eV or more.

Examples of the benzotriazole-based ultraviolet absorber include benzotriazole-based ultraviolet absorbers such as 2-(2'-hydroxy-5'-methylphenyl)benzotriazole ("Tinuvin P" available from BASF Japan Ltd.), 2-(2'-hydroxy-3',5'-di-t-butylphenyl)benzotriazole ("Tinuvin 320" available from BASF Japan Ltd.), 2-(2-hydroxy-3-t-butyl-5-methylphenyl)-5-chlorobenzotriazole ("Tinuvin 326" available from BASF Japan Ltd.) and 2-(2'-hydroxy-3',5'-di-amylphenyl)benzotriazole ("Tinuvin 328" available from BASF Japan Ltd.). It is preferred that the ultraviolet absorber be a benzotriazole-based ultraviolet absorber containing a halogen atom, and it is more preferred that the ultraviolet absorber be a benzotriazole-based ultraviolet absorber containing a chlorine atom, because those are excellent in ultraviolet ray absorbing performance.

Examples of the benzophenone-based ultraviolet absorber include octabenzone ("Chimassorb 81" available from BASF Japan Ltd.), and the like.

Examples of the triazine-based ultraviolet absorber include 2-[4,6-bis(2,4-dimethylphenyl)-1,3,5-triazine-2-yl]-5-(octyloxy)phenol ("UV-1164" available from CYTEC), "LA-F70" available from ADEKA CORPORATION, 2-(4,6-diphenyl-1,3,5-triazine-2-yl)-5-[(hexyl)oxy]-phenol ("Tinuvin 1577FF" available from BASF Japan Ltd.), and the like.

Examples of the malonic acid ester-based ultraviolet absorber include dimethyl 2-(p-methoxybenzylidene)malonate, tetraethyl-2,2-(1,4-phenylenedimethylidene)bismalonate, 2-(p-methoxybenzylidene)-bis(1,2,2,6,6-pentamethyl-4-piperidinyl)malonate, and the like.

Examples of a commercial product of the malonic acid ester-based ultraviolet absorber include dimethyl (p-methoxybenzilidene)malonate ("Hostavin PR-25" available from Clariant Japan K.K.), Hostavin B-CAP, Hostavin PR-25, and Hostavin PR-31 (any of these is available from Clariant Japan K.K.).

Examples of the oxanilide-based ultraviolet absorber include oxalic acid diamides having a substituted aryl group and the like on the nitrogen atom such as N-(2-ethylphenyl)-N'-(2-ethoxy-5-t-butylphenyl)oxalic acid diamide, N-(2-ethylphenyl)-N'-(2-ethoxy-phenyl)oxalic acid diamide, and 2-ethyl-2'-ethoxy-oxanilide ("Sanduvor VSU" available from Clariant Japan K.K.).

Examples of the benzoate-based ultraviolet absorber include 2,4-di-t-butylphenyl-3,5-di-t-butyl-4-hydroxybenzoate ("Tinuvin 120" available from BASF Japan Ltd.), and the like.

From the viewpoint of effectively making a void difficult to be formed in an end part of laminated glass, it is preferred that the ultraviolet absorber contain a malonic ester compound or a triazine compound. From the viewpoint of effectively making a void difficult to be formed in an end part of laminated glass, it is preferred that the ultraviolet absorber contain the malonic ester compound. From the viewpoint of effectively making a void difficult to be formed in an end part of laminated glass, it is preferred that the malonic ester compound be dimethyl (p-methoxybenzilidene)malonate. From the viewpoint of effectively making a void difficult to be formed in an end part of laminated glass, it is preferred that the ultraviolet absorber contain the triazine compound. From the viewpoint of effectively making a void difficult to be formed in an end part of laminated glass, it is preferred that the triazine compound be 2-[4,6-bis(2,4-dimethylphenyl)-1,3,5-triazine-2-yl]-5-(octyloxy)phenol.

From the viewpoint of enhancing the ultraviolet ray absorbing effect, and effectively making a void difficult to be formed in an end part of laminated glass, it is preferred that the ultraviolet absorber contain a benzotriazole compound, and it is more preferred that the ultraviolet absorber contain a malonic ester compound or a triazine compound, and a benzotriazole compound. The ultraviolet absorber may contain a malonic ester compound and a benzotriazole compound, and may contain a triazine compound and a benzotriazole compound. From the viewpoint of enhancing the ultraviolet ray absorbing effect, and effectively making a void difficult to be formed in an end part of laminated glass, it is preferred that the benzotriazole compound be 2-(2-hydroxy-3-t-butyl-5-methylphenyl)-5-chlorobenzotriazole.

In 100% by weight of the interlayer film or in 100% by weight of a layer containing the ultraviolet absorber (a first layer, a second layer, or a third layer), the content of the ultraviolet absorber is preferably 0.1% by weight or more, more preferably 0.2% by weight or more, further preferably 0.3% by weight or more, and especially preferably 0.5% by weight or more. In 100% by weight of the interlayer film or in 100% by weight of a layer containing the ultraviolet absorber (a first layer, a second layer, or a third layer), the content of the ultraviolet absorber is preferably 2.5% by weight or less, more preferably 2% by weight or less, further preferably 1% by weight or less, and especially preferably 0.8% by weight or less. When the content of the ultraviolet absorber is the above-described lower limit or more and the above-described upper limit or less, deterioration in visible light transmittance after a lapse of a period can be further suppressed. In particular, by setting the content of the ultraviolet absorber to 0.2% by weight or more in 100% by weight of a layer containing the ultraviolet absorber, with regard to the interlayer film and laminated glass, the lowering in visible light transmittance thereof after the lapse of a certain period of time can be significantly suppressed.

From the viewpoint of effectively making a void difficult to be formed in an end part of laminated glass, in 100% by weight of the interlayer film, it is preferred that the content of the malonic ester compound be 0.14% by weight or more, and 0.6% by weight or less. From the viewpoint of effectively making a void difficult to be formed in an end part of laminated glass, in 100% by weight of a layer containing the ultraviolet absorber (a first layer, a second layer, or a third layer), it is preferred that the content of the malonic ester compound be 0.14% by weight or more, and 0.6% by weight or less. From the viewpoint of effectively making a void difficult to be formed in an end part of laminated glass, in 100% by weight of the interlayer film, it is preferred that the content of the triazine compound be 0.045% by weight or more, and 1% by weight or less. From the viewpoint of effectively making a void difficult to be formed in an end part of laminated glass, in 100% by weight of a layer containing the ultraviolet absorber (a first layer, a second layer, or a third layer), it is preferred that the content of the triazine compound be 0.045% by weight or more, and 1% by weight or less. From the viewpoint of effectively making a void difficult to be formed in an end part of laminated glass, in 100% by weight of the interlayer film, it is preferred that the content of the triazine compound be 0.045% by weight or more, and 0.2% by weight or less. From the viewpoint of effectively making a void difficult to be formed in an end part of laminated glass, in 100% by weight of a layer containing the ultraviolet absorber (a first layer, a second layer, or a third layer), it is preferred that the content of the triazine compound be 0.045% by weight or more, and 0.2% by weight or less. From the viewpoint of effectively making a void difficult to be formed in an end part of laminated glass, in 100% by weight of the interlayer film, it is preferred that the content of the triazine compound be 0.08% by weight or more, and 1% by weight or less. From the viewpoint of effectively making a void difficult to be formed in an end part of laminated glass, in 100% by weight of a layer containing the ultraviolet absorber (a first layer, a second layer, or a third layer), it is preferred that the content of the triazine compound be 0.08% by weight or more, and 1% by weight or less. From the viewpoint of effectively making a void difficult to be formed in an end part of laminated glass, in 100% by weight of the interlayer film, it is preferred that the content of the benzotriazole compound be more than 0% by weight and 0.33% by weight or less. From the viewpoint of effectively making a void difficult to be formed in an end part of laminated glass, it is preferred that the content of the benzotriazole compound in a layer containing the ultraviolet absorber (a first layer, a second layer, or a third layer) be more than 0% by weight and 0.33% by weight or less.

### (Oxidation inhibitor)

It is preferred that the interlayer film contain an oxidation inhibitor. It is preferred that the first layer contain an oxidation inhibitor. It is preferred that the second layer contain an oxidation inhibitor. It is preferred that the third layer contain an oxidation inhibitor. One kind of the oxidation inhibitor may be used alone, and two or more kinds thereof may be used in combination.

Examples of the oxidation inhibitor include a phenol-based oxidation inhibitor, a sulfur-based oxidation inhibitor, a phosphorus-based oxidation inhibitor, and the like. The phenol-based oxidation inhibitor is an oxidation inhibitor having a phenol skeleton. The sulfur-based oxidation inhibitor is an oxidation inhibitor containing a sulfur atom. The phosphorus-based oxidation inhibitor is an oxidation inhibitor containing a phosphorus atom.

It is preferred that the oxidation inhibitor be a phenol-based oxidation inhibitor or a phosphorus-based oxidation inhibitor.

Examples of the phenol-based oxidation inhibitor include 2,6-di-t-butyl-p-cresol (BHT), butyl hydroxyanisole (BHA), 2,6-di-t-butyl-4-ethylphenol, stearyl β-(3,5-di-t-butyl-4-hydroxyphenyl)propionate, 2,2'-methylenebis-(4-methyl-6-butylphenol), 2,2'-methylenebis-(4-ethyl-6-t-butylphenol), 4,4'-butylidene-bis-(3-methyl-6-t-butylphenol), 1,1,3-tris-(2-methyl-hydroxy-5-t-butylphenyl)butane, tetrakis[methylene-3-(3',5'-butyl-4-hydroxyphenyl)propionate]methane, 1,3,3-tris-(2-methyl-4-hydroxy-5-t-butylphenol)butane, 1,3,5-trimethyl-2,4,6-tris(3,5-di-t-butyl-4-hydroxybenzyl)benzene, bis(3,3'-t-butylphenol)butyric acid glycol ester, bis(3-t-butyl-4-hydroxy-5-methylbenzenepropanoic acid)ethylenebis(oxyethylene), and the like. One kind or two or more kinds among these oxidation inhibitors are suitably used.

Examples of the phosphorus-based oxidation inhibitor include tridecyl phosphite, tris(tridecyl) phosphite, triphenyl phosphite, trinonylphenyl phosphite, bis(tridecyl)pentaerithritol diphosphite, bis(decyl)pentaerithritol diphosphite, tris(2,4-di-t-butylphenyl) phosphite, bis(2,4-di-t-butyl-6-methylphenyl)ethyl ester phosphorous acid, 2,2'-methylenebis(4,6-di-t-butyl-1-phenyloxy)(2-ethylhexyloxy) phosphorus, and the like. One kind or two or more kinds among these oxidation inhibitors are suitably used.

Examples of a commercial product of the oxidation inhibitor include "IRGANOX 245" available from BASF Japan Ltd., "IRGAFOS 168" available from BASF Japan Ltd., "IRGAFOS 38" available from BASF Japan Ltd., "Sumilizer BHT" available from Sumitomo Chemical Co., Ltd., "IRGANOX 1010" available from BASF Japan Ltd., and the like.

With regard to the interlayer film and laminated glass, in order to maintain high visible light transmittance thereof over a long period of time, it is preferred that the content of the oxidation inhibitor be 0.1% by weight or more in 100% by weight of the interlayer film or in 100% by weight of the layer containing the oxidation inhibitor (a first layer, a second layer or a third layer). Moreover, since an effect commensurate with the addition of an oxidation inhibitor is not attained, it is preferred that the content of the oxidation inhibitor be 2% by weight or less in 100% by weight of the interlayer film or in 100% by weight of the layer containing the oxidation inhibitor.

### (Other ingredients)

Each of the interlayer film, the first layer, the second layer, and the third layer may contain additives such as a flame retardant, an antistatic agent, a pigment, a dye, an adhesive force regulator, a moisture-resistance improving agent, a fluorescent brightening agent, and an infrared ray absorber, as necessary. One kind of these additives may be used alone, and two or more kinds thereof may be used in combination.

### (Other details of interlayer film for laminated glass)

The distance between one end and the other end of the interlayer film is preferably 0.5 m or more, more preferably 0.8 m or more, and especially preferably 1 m or more, and is preferably 3 m or less, more preferably 2 m or less, and especially preferably 1.5 m or less. When the interlayer film has a longitudinal direction and a width direction, the distance between one end and the other end is a distance in the longitudinal direction of the interlayer film. When the interlayer film has a square planar shape, the distance between one end and the other end is a distance between one end and the other end that are opposed to each other.

From the viewpoint of further improving the sound insulating properties of laminated glass when the interlayer film for laminated glass has a two or more-layer structure or a three or more-layer structure, the glass transition temperature of the first layer is preferably 30°C or less, and more preferably 20°C or less. The glass transition temperature of the first layer is preferably -15°C or more.

The thickness of the interlayer film for laminated glass according to the present invention is not particularly limited. From the viewpoint of the practical aspect and the viewpoint of sufficiently heightening the heat shielding property, the thickness of the interlayer film is preferably 0.1 mm or more, and more preferably 0.25 mm or more and is preferably 3 mm or less, and more preferably 1.5 mm or less. When the thickness of the interlayer film is the above-described lower limit or more, the penetration resistance of laminated glass is enhanced. When the thickness of the interlayer film is the above-described upper limit or less, the transparency of the interlayer film is further improved.

The thickness of the interlayer film is designated as T. From the viewpoint of making a void more difficult to be formed in an end part of laminated glass, and further suppressing deterioration in transparency of laminated glass in the case of a multi-layered interlayer film, the thickness of the first layer is preferably 0.0625T or more, more preferably 0.1T or more, and is preferably 0.375T or less, and more preferably 0.25T or less.

From the viewpoint of making a void more difficult to be formed in an end part of laminated glass, and further suppressing deterioration in transparency of laminated glass, the thickness of each of the second layer and the third layer is preferably 0.625T or more, more preferably 0.75T or more, and is preferably 0.9375T or less, and more preferably 0.9T or less. When the thickness of each of the second layer and the third layer is the above-described lower limit or more and the above-described upper limit or less, bleeding out of the plasticizer can be suppressed.

From the viewpoint of making a void more difficult to be formed in an end part of laminated glass, a total thickness of the second layer and the third layer is preferably 0.625T or more, more preferably 0.75T or more, and is preferably 0.9375T or less, and more preferably 0.9T or less when the interlayer film is provided with the second layer and the third layer. When the total thickness of the second layer and the third layer is the above-described lower limit or more and the above-described upper limit or less, bleeding out of the plasticizer can be suppressed.

The interlayer film may be an interlayer film having a uniform thickness, or may be an interlayer film having varying thickness. The sectional shape of the interlayer film may be a rectangular shape and may be a wedge-like shape.

The production method of the interlayer film for laminated glass according to the present invention is not particularly limited. In the case of a single-layered interlayer film, examples of the production method of the interlayer film for laminated glass according to the present invention include a method of extruding a resin composition with an extruder. In the case of a multi-layered interlayer film, examples of the production method of the interlayer film for laminated glass according to the present invention include a method of separately forming resin compositions used for constituting respective layers into respective layers, and then layering the obtained layers, a method of coextruding resin compositions used for constituting respective layers with an extruder and layering the layers, and the like. A production method of extrusion-molding is preferred because the method is suitable for continuous production.

For the reason of excellent production efficiency of the interlayer film, it is preferred that the second layer and the third layer contain the same polyvinyl acetal resin. For the reason of excellent production efficiency of the interlayer film, it is preferred that the second layer and the third layer contain the same polyvinyl acetal resin and the same plasticizer. For the reason of excellent production efficiency of the interlayer film, it is further preferred that the second layer and the third layer be formed of the same resin composition.

It is preferred that the interlayer film have protrusions and recesses on at least one surface of the surfaces of both sides. It is preferred that the interlayer film have protrusions and recesses on surfaces of both sides. Examples of the method for forming the protrusions and recesses include, but are not particularly limited to, a lip emboss method, an emboss roll method, a calender roll method, and a profile extrusion method. The emboss roll method is preferred because a large number of embosses of the protrusions and recesses, which is a quantitatively constant protrusion and recess pattern, can be formed.

### (Pressed interlayer film)

The pressed interlayer film can be obtained by pressing the interlayer film with a press molder to have a thickness of 3% of the thickness before pressing.

The spectral transmittance of the pressed interlayer film is measured with a spectrophotometer in accordance with JIS R3106(1998). Examples of the measuring machine include "U4100" available from Hitachi, Ltd., and the like.

The spectral transmittance of the pressed interlayer film at a wavelength of 380 nm is 60% or more, preferably 62% or more, and more preferably 63% or more. When the above-described lower limit is satisfied, it is possible to keep the transparency of the laminated glass prepared with the interlayer film for laminated glass.

The spectral transmittance of the pressed interlayer film at a wavelength of 350 nm is 40% or less, preferably 35% or less, and more preferably 20% or less. When the above-described upper limit is satisfied, it is possible to make a void difficult to be formed in an end part of laminated glass prepared with the interlayer film for laminated glass.

The spectral transmittance of the pressed interlayer film at a wavelength of 320 nm is 38% or less, preferably 30% or less, and more preferably 25% or less. When the above-described upper limit is satisfied, it is possible to make a void difficult to be formed in an end part of laminated glass prepared with the interlayer film for laminated glass.

### (Laminated glass)

Fig. 3 is a partially cutaway sectional view schematically showing an example of laminated glass prepared with the interlayer film for laminated glass shown in Fig. 1.

A laminated glass 11 shown in Fig. 3 is provided with a first lamination glass member 21, a second lamination glass member 22, and the interlayer film 1. The interlayer film 1 is arranged between the first lamination glass member 21 and the second lamination glass member 22, to be sandwiched therebetween.

The first lamination glass member 21 is layered on the first surface 1a of the interlayer film 1. The second lamination glass member 22 is layered on the second surface 1b opposite to the first surface 1a of the interlayer film 1. The first lamination glass member 21 is layered on the outer surface 3a of the second layer 3 of the interlayer film 1. The second lamination glass member 22 is layered on the outer surface 4a of the third layer 4 of the interlayer film 1.

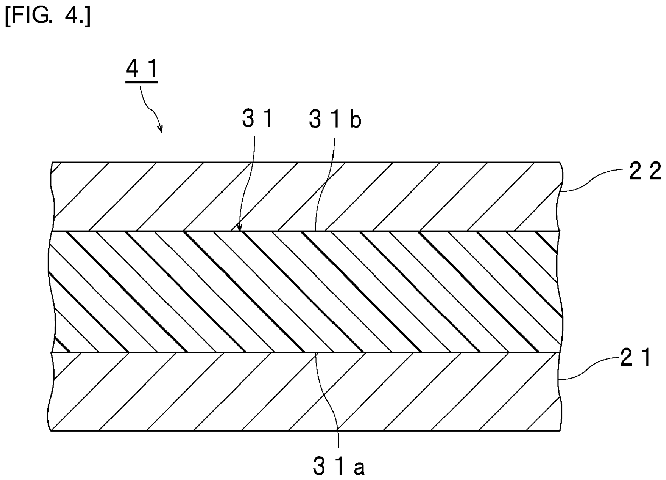

Fig. 4 is a partially cutaway sectional view schematically showing an example of laminated glass prepared with the interlayer film for laminated glass shown in Fig. 2.

A laminated glass 41 shown in Fig. 4 is provided with the first lamination glass member 21, the second lamination glass member 22, and an interlayer film 31. The interlayer film 21 is arranged between the first lamination glass member 21 and the second lamination glass member 22, to be sandwiched therebetween. The first lamination glass member 21 is layered on a first surface 31a of the interlayer film 31. The second lamination glass member 22 is layered on a second surface 31b opposite to the first surface 31a of the interlayer film 31.

As described above, the laminated glass according to the present invention is provided with a first lamination glass member, a second lamination glass member, and an interlayer film arranged between the first lamination glass member and the second lamination glass member, and the interlayer film is the interlayer film for laminated glass of the present invention.

Examples of the lamination glass member include a glass plate, a PET (polyethylene terephthalate) film, and the like. As the laminated glass, laminated glass in which an interlayer film is sandwiched between a glass plate and a PET film or the like, as well as laminated glass in which an interlayer film is sandwiched between two glass plates, is included. The laminated glass is a laminate provided with a glass plate, and it is preferred that at least one glass plate be used. It is preferred that each of the first lamination glass member and the second lamination glass member be a glass plate or a PET film and at least one among the first lamination glass member and the second lamination glass member be a glass plate.

Examples of the glass plate include a sheet of inorganic glass and a sheet of organic glass. Examples of the inorganic glass include float plate glass, heat ray-absorbing plate glass, heat ray-reflecting plate glass, polished plate glass, figured glass, wired plate glass, and the like. The organic glass is synthetic resin glass substituted for inorganic glass. Examples of the organic glass include a polycarbonate plate, a poly(meth)acrylic resin plate, and the like. Examples of the poly(meth)acrylic resin plate include a polymethyl (meth)acrylate plate, and the like.

The thickness of the lamination glass member is preferably 1 mm or more, preferably 5 mm or less and more preferably 3 mm or less. Moreover, when the lamination glass member is a glass plate, the thickness of the glass plate is preferably 1 mm or more, and is preferably 5 mm or less and more preferably 3 mm or less. When the lamination glass member is a PET film, the thickness of the PET film is preferably 0.03 mm or more and preferably 0.5 mm or less.

The method for producing the laminated glass is not particularly limited. First, the interlayer film is sandwiched between the first lamination glass member and the second lamination glass member to obtain a laminate. Then, for example, by passing the obtained laminate through pressure rolls or subjecting the obtained laminate to decompression suction in a rubber bag, the air remaining between the first and the second lamination glass members and the interlayer film is removed. Then, the laminate is preliminarily bonded together at about 70 to 110°C to obtain a preliminarily press-bonded laminate. Next, by putting the preliminarily press-bonded laminate into an autoclave or by pressing the laminate, the laminate is press-bonded at about 120 to 150°C and under a pressure of 1 to 1.5 MPa. In this way, laminated glass can be obtained.

Each of the interlayer film and the laminated glass can be used for automobiles, railway vehicles, aircraft, ships, buildings, and the like. Each of the interlayer film and the laminated glass can also be used for applications other than these applications. It is preferred that the interlayer film and the laminated glass be an interlayer film and laminated glass for vehicles or for building respectively, and it is more preferred that the interlayer film and the laminated glass be an interlayer film and laminated glass for vehicles respectively. Each of the interlayer film and the laminated glass can be used for a windshield, side glass, rear glass, or roof glass of an automobile, and the like. The interlayer film and the laminated glass are suitably used for automobiles. The interlayer film is used for obtaining laminated glass of an automobile.

Hereinafter, the present invention will be described in more detail with reference to examples. The present invention is not limited only to these examples.

With regard to the polyvinyl butyral resin (PVB) used in the following examples and comparative examples, the butyralization degree (the acetalization degree), the acetylation degree and the content of the hydroxyl group were measured by a method in accordance with JIS K6728 "Testing methods for polyvinyl butyral". In this connection, even in the cases of being measured according to ASTM D1396-92, numerical values similar to those obtained by a method in accordance with JIS K6728 "Testing methods for polyvinyl butyral" were exhibited.

In the examples and comparative examples, the following ultraviolet absorbers and oxidation inhibitors were used.
Ultraviolet absorber:
   Hostavin PR-25 (dimethyl (p-methoxybenzylidene)malonate, "Hostavin PR-25" available from Clariant Japan K.K.)
   UV-1164 (2-[4,6-bis(2,4-dimethylphenyl)-1,3,5-triazine-2-yl]-5-(octyloxy)phenol, "UV-1164" available from CYTEC)
   Tinuvin405 (2-[4,6-bis(2,4-dimethylphenyl)-1,3,5-triazine-2-yl]-5-3-(2-ethylhexyl)oxy-2-hydroxypropoxyphenol, "Tinuvin405" available from BASF Japan Ltd.)
   Tinuvin326 (2-(2-hydroxy-3-t-butyl-5-methylphenyl)-5-chlorobenzotriazole, "Tinuvin326" available from BASF Japan Ltd.)
Oxidation inhibitor:
   BHT (2,6-di-t-butyl-p-cresol)
   IRGANOX 1076 (Oxidation inhibitor having a phenol skeleton available from BASF Japan Ltd.)
   IRGANOX 259 (Oxidation inhibitor having a phenol skeleton available from BASF Japan Ltd.)

### (Example 1)

Preparation of composition X for forming interlayer film:
The following ingredients were mixed to obtain composition X for forming an interlayer film.
100 parts by weight of a polyvinyl acetal resin (polyvinyl butyral (PVB) resin, the average polymerization degree of polyvinyl alcohol (PVA) of 1700, the content of the hydroxyl group of 30% by mole, the acetylation degree of 1% by mole, the acetalization degree of 69% by mole)
40 parts by weight of triethylene glycol di-2-ethylhexanoate (3GO) which is a plasticizer
The amount in the resultant interlayer film shown in the following Table 1 of UV-1164 (available from CYTEC)
The amount in the resultant interlayer film shown in the following Table 1 of BHT

### Preparation of interlayer film:

By extruding composition X for forming an interlayer film with an extruder, a single-layered interlayer film (thickness: 800 µm) was prepared.

### Preparation of laminated glass:

The obtained interlayer film was cut out into a piece of 8 cm long × 8 cm wide. Then the interlayer film was sandwiched between two sheets of clear glass (8 cm long × 8 cm wide × 2.5 mm thick), and vacuum-pressed by retention at 90°C for 30 minutes with a vacuum laminator, to obtain a laminate. In the laminate, the part of the interlayer film protruding from the glass was cut off, to obtain laminated glass.

### (Examples 2 to 15 and Comparative Examples 1 to 5)

An interlayer film and laminated glass were prepared in the same manner as in Example 1 except that the kinds of the ingredients (ultraviolet absorber and oxidation inhibitor) contained in the interlayer film, and the contents of the ingredients (ultraviolet absorber and oxidation inhibitor) were set as shown in Tables 1, 2.

### (Evaluation)

### (1) Spectral transmittance of pressed interlayer film

The interlayer film having a thickness of 800 µm, cut out into a piece of 8 cm long x 8 cm wide was pressed with a press molder to have a thickness of 3% of the thickness before pressing, to obtain a pressed interlayer film. Then the pressed interlayer film was sandwiched between two sheets of clear glass (8 cm long × 8 cm wide × 2.5 mm thick), and vacuum-pressed by retention at 90°C for 30 minutes with a vacuum laminator, to obtain a laminate. In the laminate, the part of the interlayer film protruding from the glass was cut off, to obtain laminated glass. The pressed interlayer film (laminated glass) was evaluated for spectral transmittances at a wavelength of 380nm, a wavelength of 350nm, and a wavelength of 320nm with a spectrophotometer ("U4100" available from Hitachi, Ltd.) in accordance with JIS R3106 (1998).

### (2) Condition of void in end part of laminated glass (edge foaming)

The laminated glass was irradiated with ultraviolet rays (quartz glass mercury lamp (750W)) for 2000 hours using an UV irradiator ("HLG-2S" available from Suga Test Instruments Co., Ltd.) in accordance with JIS R3205. After the test, the end part of the laminated glass was observed, and the condition of a void in the end part of the laminated glass was evaluated. The condition of a void was judged according to the following criteria.

### [Criteria for condition of voids]

○: In an end part of laminated glass, there is no void, or a void remains in a distance of 1 mm or less inwardly in the direction orthogonal to an end side having the end part from the end part.
×: In an end part of laminated glass, a void extends to a distance of more than 1 mm inwardly in the direction orthogonal to an end side having the end part from the end part.

The results are shown in the following Tables 1, 2.

In all Examples, no problem was observed in transparency of laminated glass by visual observation.

**[Table 1]**

| | Kind and content of ultraviolet absorber and oxidation inhibitor | | | | | | Evaluation | | | |
|---|---|---|---|---|---|---|---|---|---|---|
| | Ultraviolet absorber (First kind) | | Ultraviolet absorber (Second kind) | | Oxidation inhibitor | | Spectral transmittance (%) of pressed interlayer film | | | Edge foaming |
| | Kind | Content (wt%) | Kind | Content (wt%) | Kind | Content (wt%) | 380 nm | 350 nm | 320 nm | Condition of void |
| Example 1 | Tinuvin326 | 0.29 | UV-1164 | 0.05 | BHT | 0.14 | 63.0 | 39.0 | 37.2 | ○ |
| Example 2 | Tinuvin326 | 0.29 | UV-1164 | 0.10 | BHT | 0.14 | 62.1 | 33.0 | 27.6 | ○ |
| Example 3 | Tinuvin326 | 0.29 | Hostavin PR-25 | 0.38 | BHT | 0.14 | 63.4 | 37.0 | 6.9 | ○ |
| Example 4 | Tinuvin326 | 0.29 | Tinuvin405 | 0.29 | BHT | 0.14 | 63.3 | 26.2 | 27.2 | ○ |
| Example 5 | Tinuvin326 | 0.29 | Tinuvin405 | 0.50 | BHT | 0.14 | 63.0 | 17.5 | 17.5 | ○ |
| Example 6 | Tinuvin326 | 0.29 | UV-1164 | 0.05 | IRGANOX 1076 | 0.14 | 63.0 | 39.0 | 37.2 | ○ |
| Example 7 | Tinuvin326 | 0.29 | UV-1164 | 0.10 | IRGANOX 1076 | 0.14 | 62.1 | 33.0 | 27.6 | ○ |
| Example 8 | Tinuvin326 | 0.29 | Hostavin PR-25 | 0.38 | IRGANOX 1076 | 0.14 | 63.4 | 37.0 | 6.9 | ○ |
| Example 9 | Tinuvin326 | 0.29 | Tinuvin405 | 0.29 | IRGANOX 1076 | 0.14 | 63.3 | 26.2 | 27.2 | ○ |
| Example 10 | Tinuvin326 | 0.29 | Tinuvin405 | 0.50 | IRGANOX 1076 | 0.14 | 63.0 | 17.5 | 17.5 | ○ |
| Example 11 | Tinuvin326 | 0.29 | UV-1164 | 0.05 | IRGANOX 259 | 0.14 | 63.0 | 39.0 | 37.2 | ○ |
| Example 12 | Tinuvin326 | 0.29 | UV-1164 | 0.10 | IRGANOX 259 | 0.14 | 62.1 | 33.0 | 27.6 | ○ |
| Example 13 | Tinuvin326 | 0.29 | Hostavin PR-25 | 0.38 | IRGANOX 259 | 0.14 | 63.4 | 37.0 | 6.9 | ○ |
| Example 14 | Tinuvin326 | 0.29 | Tinuvin405 | 0.29 | IRGANOX 259 | 0.14 | 63.3 | 26.2 | 27.2 | ○ |
| Example 15 | Tinuvin326 | 0.29 | Tinuvin405 | 0.50 | IRGANOX 259 | 0.14 | 63.0 | 17.5 | 17.5 | ○ |

**[Table 2]**

| | Kind and content of ultraviolet absorber and oxidation inhibitor | | | | | | Evaluation | | | |
|---|---|---|---|---|---|---|---|---|---|---|
| | Ultraviolet absorber (First kind) | | Ultraviolet absorber (Second kind) | | Oxidation inhibitor | | Spectral transmittance (%) of pressed interlayer film | | | Edge foaming |
| | Kind | Content (wt%) | Kind | Content (wt%) | Kind | Content (wt%) | 380 nm | 350 nm | 320 nm | Condition of void |
| Comparative Example 1 | Tinuvin326 | 0.14 | - | - | BHT | 0.14 | 76.4 | 66.5 | 66.7 | × |
| Comparative Example 2 | Tinuvin326 | 0.33 | - | - | BHT | 0.14 | 63.8 | 46.0 | 47.9 | × |
| Comparative Example 3 | Tinuvin326 | 0.29 | UV-1164 | 0.04 | BHT | 0.14 | 63.5 | 43.1 | 44.4 | × |
| Comparative Example 4 | Tinuvin326 | 0.29 | Hostavin PR-25 | 0.13 | BHT | 0.14 | 63.7 | 42.7 | 25.3 | × |
| Comparative Example 5 | Tinuvin326 | 0.29 | Tinuvin405 | 0.05 | BHT | 0.14 | 63.7 | 41.8 | 45.0 | × |

Examples 1 to 15 in which a single-layered interlayer film was formed were shown. The investigation by the present inventors revealed that even when the interlayer film provided with the configuration (2) was formed, a void became difficult to be formed in an end part of laminated glass, and deterioration in transparency of laminated glass was suppressed if the spectral transmittance of the pressed interlayer film is comparative to those in Examples 1 to 15.

### EXPLANATION OF SYMBOLS

- 1:: Interlayer film
- 1a:: First surface
- 1b:: Second surface
- 2:: First layer
- 2a:: First surface
- 2b:: Second surface
- 3:: Second layer
- 3a:: Outer surface
- 4:: Third layer
- 4a:: Outer surface
- 11:: Laminated glass
- 21:: First lamination glass member
- 22:: Second lamination glass member
- 31:: Interlayer film
- 31a:: First surface
- 31b:: Second surface
- 41:: Laminated glass

## Claims

1. An interlayer film for laminated glass having a one-layer structure or a two or more-layer structure,
the interlayer film for laminated glass containing a polyvinyl acetal resin, a plasticizer, an oxidation inhibitor, and an ultraviolet absorber,
a spectral transmittance of a pressed interlayer film when the interlayer film for laminated glass is pressed to a thickness of 3% of a thickness before pressing to obtain the pressed interlayer film being 60% or more at a wavelength of 380 nm, 40% or less at a wavelength of 350 nm, and 38% or less at a wavelength of 320 nm.

2. The interlayer film for laminated glass according to claim 1, wherein
the interlayer film for laminated glass includes only a first layer containing a polyvinyl acetal resin, a plasticizer, and an oxidation inhibitor, or
the interlayer film for laminated glass includes a first layer containing a polyvinyl acetal resin, a plasticizer, and an oxidation inhibitor, and a second layer arranged on a first surface side of the first layer, containing a polyvinyl acetal resin, a plasticizer, and an oxidation inhibitor, and the interlayer film for laminated glass optionally includes a third layer arranged on a second surface side that is opposite to the first surface side of the first layer, containing a polyvinyl acetal resin, a plasticizer and an oxidation inhibitor, and at least one layer of the first layer, the second layer and the third layer contains an ultraviolet absorber.

3. The interlayer film for laminated glass according to claim 1 or 2, wherein the ultraviolet absorber contains a malonic ester compound or a triazine compound.

4. The interlayer film for laminated glass according to claim 3, wherein the ultraviolet absorber contains the malonic ester compound.

5. The interlayer film for laminated glass according to claim 3 or 4, wherein the malonic ester compound is dimethyl (p-methoxybenzylidene)malonate.

6. The interlayer film for laminated glass according to any one of claims 3 to 5, wherein the ultraviolet absorber contains the triazine compound.

7. The interlayer film for laminated glass according to any one of claims 3 to 6, wherein the triazine compound is 2-[4,6-bis(2,4-dimethylphenyl)-1,3,5-triazine-2-yl]-5-(octyloxy)phenol.

8. The interlayer film for laminated glass according to any one of claims 3 to 7, wherein
the ultraviolet absorber contains the malonic ester compound, and
in the interlayer film for laminated glass, a content of the malonic ester compound is 0.14% by weight or more and 0.6% by weight or less.

9. The interlayer film for laminated glass according to any one of claims 3 to 8, wherein
the ultraviolet absorber contains the triazine compound, and
in the interlayer film for laminated glass, a content of the triazine compound is 0.045% by weight or more and 1% by weight or less.

10. The interlayer film for laminated glass according to claim 9, wherein in the interlayer film for laminated glass, the content of the triazine compound is 0.045% by weight or more and 0.2% by weight or less.

11. The interlayer film for laminated glass according to claim 9, wherein in the interlayer film for laminated glass, the content of the triazine compound is 0.08% by weight or more and 1% by weight or less.

12. The interlayer film for laminated glass according to any one of claims 1 to 11, wherein the ultraviolet absorber contains a benzotriazole compound.

13. The interlayer film for laminated glass according to claim 12, wherein the benzotriazole compound is 2-(2-hydroxy-3-t-butyl-5-methylphenyl)-5-chlorobenzotriazole.

14. The interlayer film for laminated glass according to claim 12 or 13, wherein in the interlayer film for laminated glass, a content of the benzotriazole compound is more than 0% by weight and 0.33% by weight or less.

15. A laminated glass, comprising:
a first lamination glass member;
a second lamination glass member; and
the interlayer film for laminated glass according to any one of claims 1 to 14,
the interlayer film for laminated glass being arranged between the first lamination glass member and the second lamination glass member.
